# EUROPEAN PATENT APPLICATION

(11) **EP 1 530 351 A2**
(43) Date of publication of application: **11.05.2005**
(21) Application number: 04012788.8
(22) Date of filing: 28.05.2004
(51) Int. Cl.: H04M 1/725

(54) **System and method for providing background music**

(30) Priority: 10.11.2003 KR 2003079102
(71) Applicant: Samsung Electronics Co., Ltd., Suwon-si, Gyeonggi-do 442-742 (KR)
(72) Inventor: Lee, Se-Hyun, Yeongtong-gu Suwon-si Gyeonggi-do (KR); Lee, Hee-Jeong, Yeongtong-gu Suwon-si Gyeonggi-do (KR)
(74) Representative: Grünecker, Kinkeldey, Stockmair & Schwanhäusser Anwaltssozietät

(57) **Abstract**

A system for providing background music (BGM) in a communication state. A sound provider stores BGM and BGM list information. Upon receiving BGM list information, the sound provider detects BGM corresponding to BGM list information to output the detected BGM. A calling mobile terminal receives the BGM list information for the BGM from the sound provider, enables a plurality of BGM service modes to be set, detects a set BGM mode, and transmits the BGM list information corresponding to the set mode to the sound provider. A called mobile terminal transmits a response signal to the communication request signal. A mobile exchange connects the calling mobile terminal and the sound provider, connects the calling mobile terminal and the called mobile terminal, and transmits BGM from the sound provider to the mobile terminals.

## Description

The present invention relates generally to a background music (BGM) service of a mobile terminal, and more particularly to a system for providing a background music (BGM) service in a mobile terminal according to a user's wishes.

A background music (BGM) service provides a user receiving a mobile communication service a sound service using wired/wireless Internet and a telephone set. In using the BGM, a user selects and stores music or sound appropriate for the user's conversation content. In the BGM service, stored BGM is provided to both parties (i.e., calling and called parties) while the parties communicate with each other. Such a BGM service is currently provided through a mobile communication carrier.

The current BGM service provides a subscriber management function, a music call setup function, a resource management function, a subscriber command processing function, a call processing function, and an operation and maintenance (O&M) function. The subscriber management function includes a music call service subscriber management function and a subscriber set information (or profile information) management function. The music call setup function includes a BGM selection function, a conditional search function, a pre-listening function, a transmission condition setting function, and a volume control function. The resource management function includes a BGM resource management function, a sound storing function, an automatic sound update function, and an interface function for providing content. The subscriber command processing function includes a user information management function, a user command collection function (or digit collection function), and a command processing function.

The call processing function includes a call processing function for signal conversion, an incoming call processing function, an outgoing call processing function, an incoming call distribution function, and a line management function. The O&M function includes a statistical management function, a status management function, a failure management function, and an operation management function.

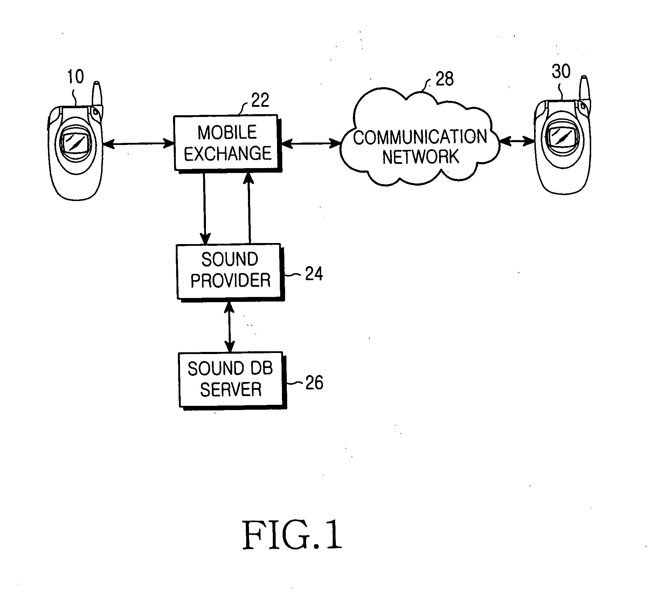

FIG. 1 is a block diagram illustrating a configuration of a system for providing background music (BGM). A calling party accesses a sound provider 24 using a mobile terminal 10 (or any other wired/wireless communication device) and selects and stores BGM to be utilized.

When the calling party inputs a destination telephone number of a called party using the mobile terminal 10 and inputs a SEND key (not shown), the mobile terminal 10 transmits, to a mobile exchange 22, the input telephone number and a telephone number assigned to the mobile terminal 10. The mobile exchange 22 sends, to a mobile terminal 30 having the destination telephone number, a communication request signal through a communication network 28. Further, the mobile exchange 22 determines whether the telephone number of the mobile terminal 10 is subscribed to the BGM service.

If the telephone number of the mobile terminal 10 is subscribed to the BGM service, the mobile exchange 22 sends the telephone number of the mobile terminal 10 to the sound provider 24. The sound provider 24 retrieves stored BGM mapped to the telephone number of the mobile terminal 10 from a sound database (DB) server 26.

The sound provider 24 then sends the retrieved BGM to the mobile exchange 22. When the mobile terminal 30 of the called party sends a response signal to the communication request signal, the mobile exchange 22 provides the BGM from the sound provider 24 to the mobile terminals 10 and 30 of the calling and called parties while they are connected to each other. As a result, each of the mobile terminals 10 and 30 of the calling and called parties outputs a sound signal as well as a voice signal sent from an opposite party through a speaker (not shown) and simultaneously outputs the BGM sent from the mobile exchange 22 through the speaker.

However, the conventional system for providing a BGM service has several limits when changing BGM. First, the number of BGM pieces is limited. More specifically, there is a problem in that the total number of BGM pieces that can be provided through the conventional sound change channel is limited to three, and more than the three BGM pieces cannot be changed.

Second, the calling party cannot easily change a preset BGM. That is, the calling party can only change the BGM through a telephone call with an operator or can recognize a list of BGM pieces through a connection based on the Internet network coupled to a communication carrier providing the BGM. Therefore, there is a problem in that the list of BGM pieces must be changed through the telephone call with the operator or the connection to the Internet network when the setting of the BGM is changed.

When the calling party receives the BGM service through the conventional BGM service providing system, a user must sequentially depress keys or buttons indicating, for example, "*79 + destination number + SEND", whenever the calling party makes a telephone call, and must know if any BGM is previously stored. If a BGM is stored, one of the existing possible three BGM pieces stored by the calling party is provided to the mobile terminals of the calling and called parties together with voice communication content.

Third, there is a problem in that BGM cannot conveniently be changed in the course of a conversation. That is, the conventional options for changing the BGM during a conversation require that a key or button, for example, "5", is depressed when the user desires to increase the volume, and a key or button, for example, "0", is depressed when the user desires to decrease the volume. Further, keys or buttons, for example, "7/9", can be depressed when the BGM piece being currently provided is changed to another BGM piece. If an additional BGM piece is not present, the BGM currently provided from the sound provider 24 is repeated. To stop the BGM, a key or button, for example, "8", is depressed. Accordingly, when any BGM piece is changed as described above, there is a drawback in that a preset button must be depressed.

Therefore, the present invention has been designed in view of the above and other problems.

It is the object of the present invention to provide a system for providing a background music (BGM) service that can select various BGM pieces according to a user commands.

This object is solved by the subject matter of the independent claims.

Preferred embodiments are defined in the dependent claims.

It is an aspect of the present invention to provide a system for providing a background music (BGM) service that enables a user to select BGM in various situations according to a place, a time, and an opposite party when the BGM is set, and that automatically provides the selected BGM according to a corresponding situation.

In accordance with an aspect of the present invention, the above and other objects can be accomplished by a system for providing a background music (BGM) service in a communication state, comprising: a sound provider storing at least one BGM piece and BGM list information corresponding to the at least one BGM piece, and outputting the at least one BGM piece when the corresponding BGM list information is received; a calling mobile terminal for receiving the BGM list information corresponding to the at least one BGM piece from the sound provider, enabling a plurality of BGM service modes to be set, detecting a set BGM service mode when a communication request signal is input, and transmitting the BGM list information for to the set mode to the sound provider; a called mobile terminal for transmitting a response signal to the communication request signal; and a mobile exchange for connecting the calling mobile terminal and the sound provider, connecting the calling mobile terminal and the called mobile terminal of the called party, and transmitting the at least one BGM piece from the sound provider to the calling and called mobile terminals, when the response signal is received from the called mobile terminal.

The calling and called mobile terminals output the at least one BGM piece sent from the sound provider while the calling and called mobile terminals are communicating with each other.

The above features and advantages of the present invention will be more clearly understood from the following detailed description taken in conjunction with the accompanying drawings, in which:
FIG. 1 is a block diagram illustrating a configuration of a system for providing background music (BGM);
FIG. 2 is a flow chart illustrating a process for receiving a BGM service in accordance with the present invention;
FIG. 3 is a block diagram illustrating a mobile terminal for providing a BGM service in accordance with the present invention;
FIG. 4 illustrates a process for receiving BGM information for the BGM service from a sound provider;
FIG. 5 illustrates a process for setting a mode for a BGM list provided from the sound provider;
FIG. 6 illustrates a process for setting a BGM service mode to receive the BGM service;
FIG. 7 is a flow chart illustrating a process for receiving the BGM service in a communication state using a mobile terminal in which the BGM service is set; and
FIG. 8 is a schematic diagram illustrating a BGM service providing system in accordance with another embodiment of the present invention.

Preferred embodiments of the present invention will be described in detail herein below with reference to the annexed drawings. In the drawings, the same or similar elements are denoted by the same reference numerals even though they are depicted in different drawings. Additionally, in the following description made in conjunction with preferred embodiments of the present invention, a variety of specific elements such as constitution elements are shown. The description of such elements has been made only for a better understanding of the present invention. Those skilled in the art will appreciate that the present invention can be implemented without using the above-mentioned specific elements. Also, in the following description, a detailed description of known functions and configurations incorporated herein will be omitted when it may obscure the subject matter of the present invention.

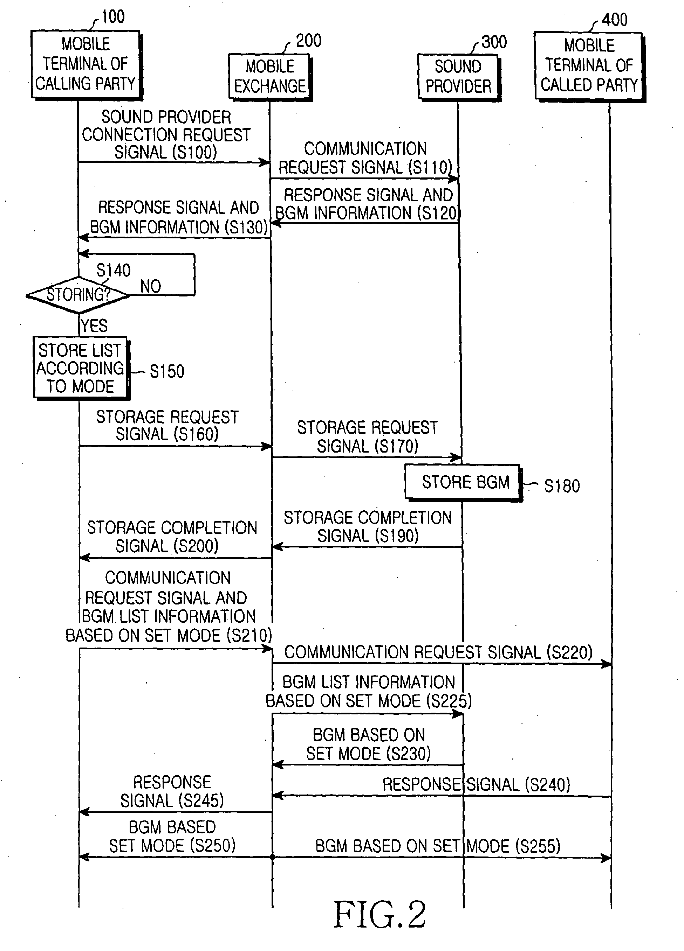

FIG. 2 is a flow chart illustrating a process for receiving a background music (BGM) service in accordance with the present invention. Referring to FIG. 2, a calling mobile terminal 100 sends a connection request signal to a mobile exchange 200 so that it can be connected to a sound provider 300 and receive the BGM service from the sound provider 300 in step S100. The mobile exchange 200 receives the connection request signal from the calling mobile terminal 100 and sends a communication request signal to the sound provider 300 in step S110.

The sound provider 300 receives the communication request signal from the mobile exchange 200, and sends a response signal and BGM information to the mobile exchange 200 in step S120. The mobile exchange 200 receives the response signal and the BGM information, and transmits the received signal and information to the calling mobile terminal 100 in step S 130.

The calling mobile terminal 100 receives the response signal and BGM information from the mobile exchange 200, outputs the BGM information, and determines whether a mode setting command and a storing command are input in step S 140. If the mode setting command and the storing command are input, the calling mobile terminal 100 stores a list of BGM information and mode setting information in response to the mode setting command in step S150.

In the embodiment of the present invention, BGM service modes capable of being set to receive the BGM service may include a time mode, a place mode, a telephone number mode, a common mode, etc. The time mode is a BGM service mode for providing BGM of a stored BGM list to the calling mobile terminal 100 and the called mobile terminal 400 in a communication state according to a set time. The place mode is a BGM service mode for providing BGM of a stored BGM list to the calling mobile terminal 100 and the called mobile terminal 400 in the communication state according to a set place. The telephone number mode is a BGM service mode for providing BGM of a stored BGM list to the calling mobile terminal 100 and the called mobile terminal 400 in the communication state according to a set telephone number of the called party. Likewise, the common mode is a BGM service mode for providing common BGM to the calling mobile terminal 100 and the called mobile terminal 400 in a communication state when a specific mode for receiving the BGM is not set.

In accordance with the present invention, because the sound provider 300, which is equipped with a large-capacity database, stores BGM set in calling mobile terminals in the database, the number of BGM pieces possibly stored on a mode-by-mode basis is not limited.

The calling mobile terminal 100 sends a storage request signal to the mobile exchange 200 to request that the sound provider 300 store BGM of a BGM list corresponding to each set mode in step S160. The mobile exchange 200 sends the storage request signal from the calling mobile terminal 100 to the sound provider 300 in step S170.

The sound provider 300 maps BGM corresponding to the storage request signal from the mobile exchange 200 to a telephone number of the calling mobile terminal 100 and stores a result of the mapping in step S180. Then, the sound provider 300 sends a storage completion signal to the mobile exchange 200, indicating that the BGM has been completely stored in step S 190. The mobile exchange 200 receives the storage completion signal and sends the received storage completion signal to the calling mobile terminal 100 in step S200. The calling mobile terminal 100 receives the storage completion signal from the mobile exchange 200 and outputs a signal, for example, text or voice, notifying a user that the storage is complete.

When the telephone number of the called mobile terminal 400 is input and a communication request signal is input, the calling mobile terminal 100 determines if a BGM service mode is set for receiving the BGM service, and sends the communication request signal and information of a BGM list associated with the set mode to the mobile exchange 200 in step S210.

The mobile exchange 200 receives the communication request signal and the BGM list information from the calling mobile terminal 100, sends the received communication request signal to the called mobile terminal 400 in step S220, and sends the received BGM list information to the sound provider 300 in step S225. The sound provider 300 receives the BGM list information from the mobile exchange 200 and sends BGM corresponding to the received BGM list information to the mobile exchange 200 in step S230.

Meanwhile, if the mobile exchange 200 receives a response signal to the communication request signal from the called mobile terminal 400 in step S240, the received response signal is sent to the calling mobile terminal 100 in step S245. At this point, the mobile exchange 200 transmits the BGM from the sound provider 300 to the calling mobile terminal 100 and the called mobile terminal 400 in steps S250 and S255. The mobile exchange 200 combines the BGM with voice signals sent from the calling mobile terminal 100 and the called mobile terminal 400, and can transmit a combined signal to destination mobile terminals.

Accordingly, the calling mobile terminal 100 sets and stores the BGM list for each service mode. The sound provider 300 maps the BGM of the BGM list to a telephone number of the calling mobile terminal 100 and stores a result of the mapping. When the calling mobile terminal 100 sends a communication request signal, the set mode is determined, BGM list information stored for the set mode is detected, and the detected BGM list information is sent to the sound provider 300. Therefore, the user can receive many different BGM pieces. Further, a BGM list is stored according to a service mode in the calling mobile terminal 100 and BGM of the stored BGM list stored according to the set mode is received from the sound provider 300.

In the above-described first embodiment of the present invention, set mode information and stored BGM list information corresponding to the set mode are stored in the mobile terminal, and a telephone number of the mobile terminal and requested BGM mapped to the telephone number are stored in the sound provider so that a BGM service operation can be performed.

In second embodiment of the present invention, the mobile terminal stores only set mode information. The sound provider stores the telephone number of the mobile terminal, mode information set in the mobile terminal, and requested BGM corresponding to the mode information. When the mobile terminal transmits the set mode information, the sound provider 200 provides the stored BGM corresponding to the set mode information. In this embodiment, there is a benefit in that the amount of data stored in the mobile terminal is reduced.

Alternatively, in a third embodiment of the present invention, BGM is stored in the mobile terminal, and a voice signal and BGM can be output according to a mode in a communication state. That is, the mobile terminal stores set mode information and BGM mapped thereto so that the BGM can be provided according to the mode. The mobile terminal corresponding to this embodiment includes a BGM playback part for reproducing BGM therein and outputting the BGM to a speaker. Further, in this embodiment, a function of the BGM playback part is performed by an audio processing part 150. Thus, when communication is performed, the mobile terminal 100 of the calling party detects set BGM according to the mode to output the detected BGM and the output BGM is sent to the mobile terminal 400 of the called party in a communication connection state. At this point, when a voice signal of the calling party is input, the mobile terminal 100 of the calling party outputs BGM set according to a mode so that a speaker (not shown) can output the BGM through the audio processing part.

More specifically, the calling mobile terminal 100 mixes and encodes the BGM set according to the mode and the input voice signal of the calling party, and then transmits a result of the mixing and encoding to the called mobile terminal 400 through an antenna (not shown). Thereafter, the called mobile terminal 400 decodes the mixed and encoded data, separates the decoded data into a voice signal and BGM, and outputs the voice signal and BGM through a speaker (not shown).

Furthermore, when the voice signal is received from the called mobile terminal 400, the calling mobile terminal 100 decodes the received voice signal and outputs the BGM together with the decoded received voice signal while outputting stored BGM according to a mode. In this embodiment, a sufficient storing space capable of storing BGM is required. When such a requirement is satisfied, mode information for the BGM service and BGM can be stored in the mobile terminal. In this embodiment, there is an added benefit in that the calling mobile terminal 100 does not need to access the sound provider 300 whenever communication is attempted in a state in which the BGM service is set. Further, as mode information for the BGM service and BGM are stored, the calling mobile terminal 100 can easily change the mode without accessing the sound provider 300.

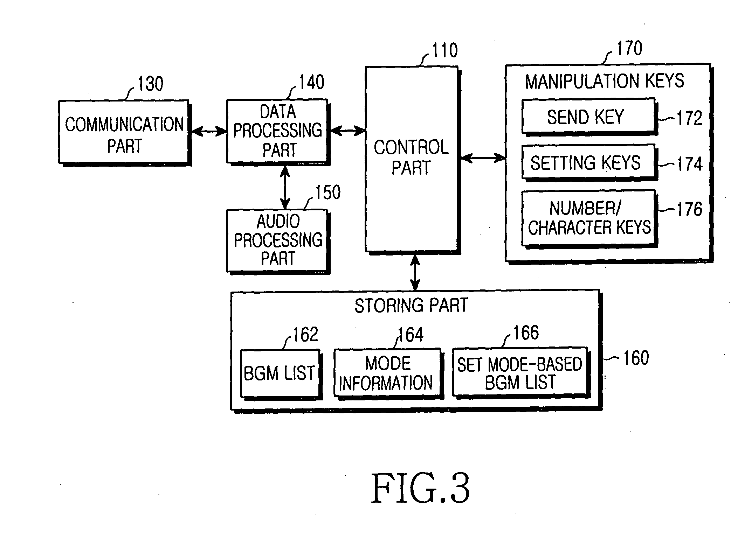

FIG. 3 is a block diagram illustrating a mobile terminal for providing a BGM service in accordance with the present invention. Referring to FIG. 3, a communication part 130 performs a wireless communication function of the mobile terminal. The communication part 130 includes among other things, a radio frequency (RF) transmitter for up-converting and amplifying a transmission signal, and an RF receiver for carrying out a low noise amplification operation for a received signal and down-converting a frequency signal.

A data processing part 140 includes a MODEM for encoding and modulating a signal to be transmitted by the communication part 130 and a CODEC for demodulating and decoding a signal received by the communication part 130. Here, the CODEC includes a data CODEC for processing packet data and an audio CODEC for processing an audio signal such as voice.

An audio processing part 150 reproduces an audio signal output from the audio CODEC of the data processing part 140 to output the reproduced audio signal through a speaker (not shown), or transmits an audio signal input from a microphone (not shown) to the audio CODEC. In accordance with the present invention, the audio processing part 150 reproduces BGM stored in a storing part 160 or externally received BGM to output the reproduced BGM through the speaker, and outputs a user's voice signal input from the microphone to the data processing part 140.

When the communication part 130 receives data in which a voice signal and BGM are mixed, and the data processing part 140 decodes the received data, the audio processing part 150 separates the decoded data into a voice signal and BGM and outputs the voice signal and BGM through the speaker. Further, when the BGM is stored in the storing part 160 in accordance with the third embodiment of the present invention, the audio processing part 150 mixes a voice signal input into the microphone and BGM detected from the storing part 160 by a control part 110 according to a mode, and outputs a result of the mixing to the data processing part 140. The data processing part 140 encodes the mixed data, and the communication part 130 transmits the encoded mixed data to an opposite mobile terminal in a communication state.

The control part 110 controls an overall operation of the mobile terminal. Further, the control part 110 can include the data processing part 140. The control part 110 can start a program stored in the storing part 160 in response to a command input from manipulation keys 170, and can change the setting of a corresponding operation.

The manipulation keys 170 may include a SEND key 172, setting keys 174 for setting an operation, and number/character keys 176 for inputting numbers and characters.

The storing part 160 stores at least one BGM list 162, mode information 164, and at least one set mode-based BGM list 166. The BGM list 162 is received from the sound provider 300 and stored as list information of stored BGM pieces. The mode information 164 is settable mode information for BGM received from the sound provider 300. The set mode-based BGM list 166 is information of a stored BGM list corresponding to a set mode for the BGM received from the sound provider 300. In the third embodiment of the present invention, the BGM received from the sound provider 300 is further stored in the storing part 160.

The control part 110 can set arbitrary BGM of the stored BGM list 162 in any one mode of the mode information 164 in response to a signal input from the manipulation keys 170. - Further, the control part 110 can delete or update the set mode-based BGM list 166 in response to a signal input from the manipulation keys 170.

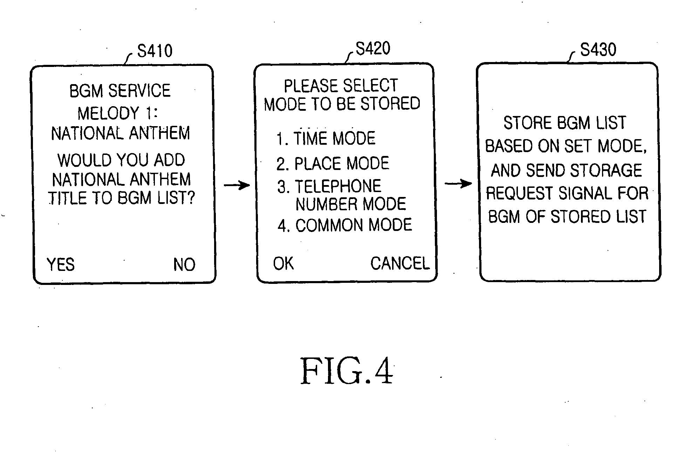

FIG. 4 illustrates a process for receiving BGM information for the BGM service from the sound provider 300. When a BGM list is selected and stored, the user must determine a mode in which BGM of the BGM list provided from the sound provider 300 will be used. Further, FIG. 4 illustrates a process for downloading a national anthem title of the BGM list.

When the national anthem title is received from the sound provider 300, the mobile terminal displays a message indicating whether the national anthem title must be added to the BGM list 162 in step S410. If the national anthem title is to be added to the BGM list 162, a user determines a mode in which a national anthem will be provided in step S420.

If the user determines a mode in which the national anthem will be provided, the mobile terminal stores the national anthem title in the set mode-based BGM list 166, and requests that the sound provider 300 store the national anthem as BGM by transmitting a storage request signal to the sound provider 300.

If the national anthem is set to be provided in a time mode, it is provided as the BGM according to a time. Further, if the national anthem is set to be provided in a place mode, it is provided as the BGM according to a place at which the user is located. Furthermore, if the national anthem is set to be provided in a telephone mode, it is provided as the BGM according to a telephone number of an opposite party.

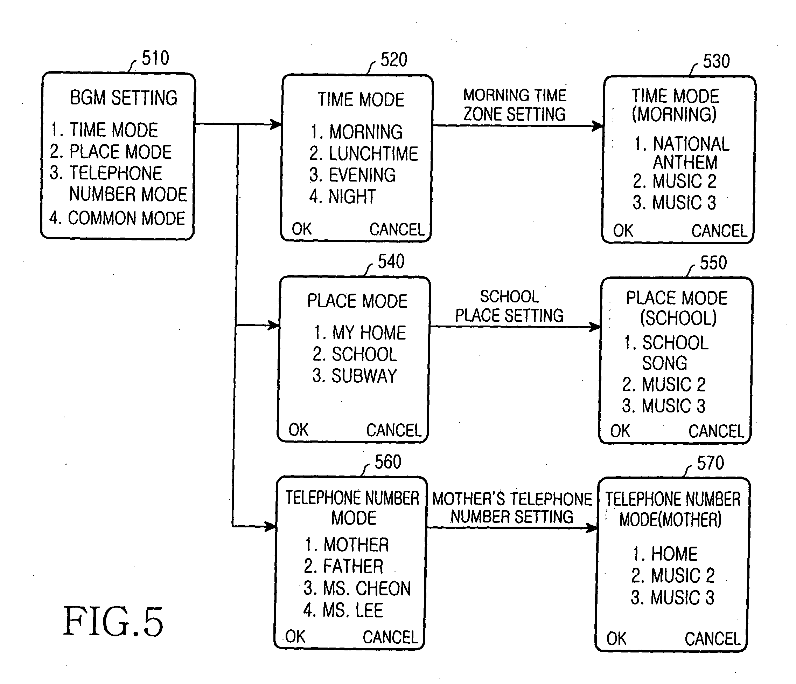

FIG. 5 illustrates a process for setting a mode for a BGM list provided from the sound provider. More specifically, FIG. 5 illustrates a process for setting detailed mode information associated with BGM added to the set mode-based BGM list 166.

Referring to FIG. 5, when the time mode is selected in a detailed setting screen 510 for the BGM list, the mobile terminal displays information on the screen so that a time zone for the BGM can be selected in the time mode as indicated by reference numeral 520. Here, for example, time zones in the time mode are classified into morning, lunchtime, evening and night. Each time zone is set on the basis of start and end hours.

When the BGM service needs to be set in the communication state in the morning, the user selects a morning time zone in a displayed time zone list containing various time zones. If the morning time zone in the time mode is selected, the mobile terminal sets the time mode and a stored BGM list withdrawn from the set mode-based BGM list 166 is displayed as indicated by reference numeral 530. Then, when a stored national anthem associated with FIG. 4 is selected, the mobile terminal in which a mode for the BGM service is set to the time mode receives the national anthem as the BGM from the sound provider 300 in the communication state at the morning time zone and outputs the national anthem.

When the place mode is selected in the BGM setting screen 510, after the BGM list provided from the sound provider 300 is set in the place mode in FIG. 4, the BGM service can be set according to a place. If the place mode has been selected, the mobile terminal displays a place list such as home, school, subway, etc., provided in the place mode as indicated by reference numeral 540.

If the school place has been selected in the place list, the mobile terminal withdraws a BGM list stored in the place mode from the set mode-based BGM list 166 and displays the BGM list as indicated by reference numeral 550. When the user sets the BGM service mode to the place mode, the mobile terminal receives BGM corresponding to a specific place from the sound provider 300 at the specific place in the set mode, and outputs the BGM.

After a BGM list provided from the sound provider 300 is set in the telephone number mode in FIG. 4, the telephone number mode is selected in the BGM setting screen 510 and the BGM service can be set according to a destination telephone number. If the telephone number mode has been selected, the mobile terminal displays a name list registered as destination telephone numbers of a mother, father, Ms. Cheon, Ms. Lee, etc., provided in the telephone number mode as indicated by reference numeral 560.

When the "mother" item is selected in the name list, the mobile terminal withdraws a BGM list stored in the telephone number mode from the set mode-based BGM list 166 and displays the withdrawn BGM list as indicated by reference numeral 570. When the user sets the BGM service mode to the telephone number mode, the mobile terminal receives, from the sound provider 300, BGM correspondingly set to a destination telephone number in the communication state and outputs the received BGM.

Lastly, the common mode in the BGM setting screen 510 is the BGM service mode for outputting common BGM when the user does not set the BGM service in any specific mode or BGM corresponding to a set mode is not present.

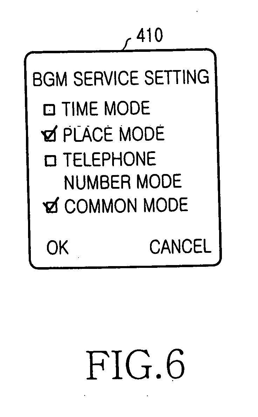

FIG. 6 illustrates a process for setting a BGM service mode to receive the BGM service according to each mode. More specifically, FIG. 6 illustrates a state for determining a mode in which BGM must be received in the communication state after the BGM list is set according to the BGM service mode through the processes illustrated in FIGS. 4 and 5.

Referring to FIG. 6, when the user sets the BGM service mode to the time mode, place mode, telephone number mode, or common mode, the mobile terminal requests that the sound provider 300 provide BGM set in each mode, and outputs corresponding BGM. For example, when the user sets the BGM service mode to the time mode, the mobile terminal retrieves a set BGM list corresponding to a current time in the time mode and requests that the sound provider 300 provide BGM. Then, the mobile terminal receives corresponding BGM from the sound provider 300 and outputs the received BGM. That is, when the current time corresponds to the morning time zone, BGM set in the morning time zone is output in the time mode. Further, when the current time corresponds to the night time zone, BGM set in the night time zone is output in the time mode.

When the user sets the BGM service mode to the place mode, the mobile terminal confirms a current place, receives, from the sound provider 300, BGM correspondingly set to the current place in the communication state, and outputs the received BGM. That is, if the current place is school, BGM set in the school place is output.

Further, when the user sets the BGM service mode to the telephone number mode, the mobile terminal receives, from the sound provider 300, BGM correspondingly set to a destination telephone number, and outputs the received BGM. For example, when the user sets the BGM service mode to the telephone number mode and makes a telephone call to the mother's telephone number stored in a telephone directory, it receives, from the sound provider 300, BGM set in the mother's telephone number in the telephone number mode and outputs the received BGM.

When the user sets the BGM service mode to the common mode indicating that the user does not set the BGM service in any specific mode or specific BGM corresponding to a set mode is not present, the mobile terminal receives common BGM from the sound provider 300 and outputs the received common BGM.

Additionally, a plurality of BGM service modes can be simultaneously set. For example, the place mode and the common mode can be simultaneously set. When the plurality of BGM service modes are set and at least two BGM pieces are selected, the mobile terminal outputs the BGM pieces provided from the sound provider 300 arbitrarily or in predetermined order. For example, when the user sets the time mode and the telephone number mode for the BGM service, a current time is within the morning time zone, and the telephone call is made with a telephone number correspondingly set to the "mother" item, the mobile terminal outputs BGM corresponding to the morning time zone and BGM corresponding to the "mother" item in predetermined order.

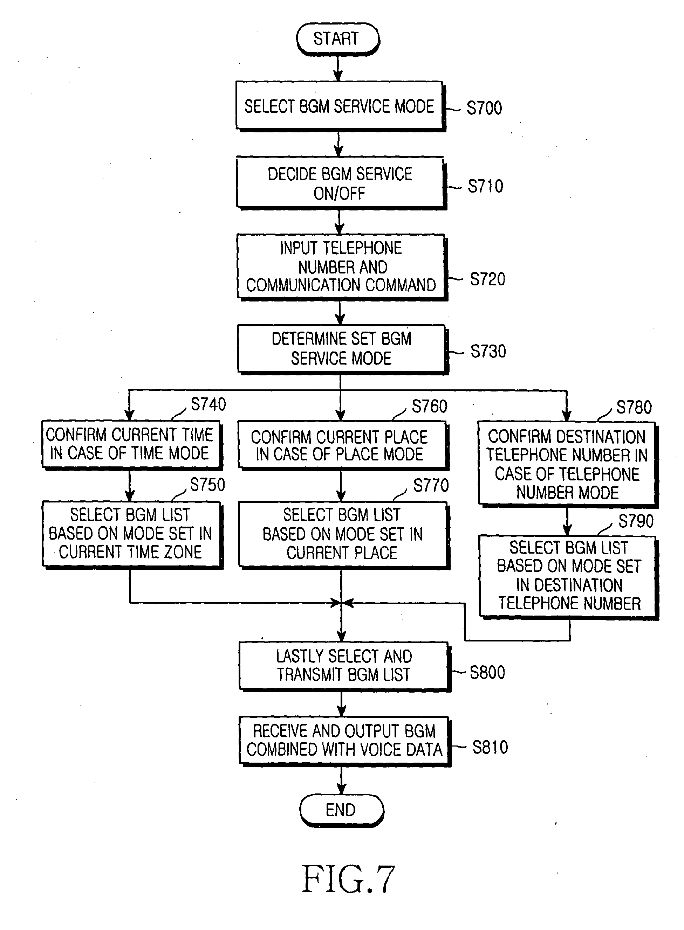

FIG. 7 is a flow chart illustrating a process for receiving the BGM service in the communication state using a mobile terminal in which the BGM service is set.

Before the process illustrated in FIG. 7 is performed, the mobile terminal can add a BGM list to the storing part 160 as illustrated in FIG. 4. At this point, the mobile terminal selects the added BGM list in any one of the time mode, the place mode, the telephone number mode, and the common mode, and stores the added BGM list in the storing part 160. Next, detailed mode information associated with the BGM list stored in the storing part 160 is set. That is, if the BGM service mode is set as the time mode when the BGM list is stored in the storing part 160, the mobile terminal sets one time zone of morning, lunchtime, evening, night, etc., as detailed time mode information according to the user's selection.

If the BGM service mode is set as the place mode when the BGM list is stored in the storing part 160, the mobile terminal sets one place of home, school, subway, etc., as detailed place mode information according to the user's selection. Similarly, if the BGM service mode is set as the telephone number mode when the BGM list is stored in the storing part 160, the mobile terminal sets one name of "mother", "father" and "friend" items, etc., as detailed place mode information according to the user's selection.

Before the user receives the BGM service, the user determines a mode in which the BGM service must be received. Thus, the mobile terminal selects a BGM service mode in response to the user's selection in step S700. At this point, the mobile terminal determines, in response to the user's selection, whether the BGM service must be in an ON/OFF state in step S710.

When the BGM service is in the ON state, a telephone number is input, and a communication command is input in step S720, a set BGM service mode is determined for the BGM service in step S730. In this embodiment, a plurality of modes can be set. An example of simultaneously setting the time mode, the place mode, and the telephone number mode is illustrated in FIG. 7.

When a set mode is the time mode, the mobile terminal confirms a current time in step S740, and selects a BGM list of the mode set in a current time zone in step S750. However, when the current mode is the place mode as well as the time mode, the mobile terminal confirms a current place in step S760 and selects a BGM list of the mode set in the current place in step S770. Alternatively, when the current mode is the telephone number mode as well as the time mode and the place mode, the mobile terminal confirms a destination telephone number in step S780 and selects a BGM list of the mode set in the destination telephone number in step 5790.

When the plurality of modes are simultaneously set, the mobile terminal requests that the sound provider 300 provide a BGM list corresponding to each mode, and arbitrarily outputs BGM pieces. However, the mobile terminal lastly selects one of BGM lists and can request that the sound provider 300 provide the BGM service corresponding to the selected BGM list, as illustrated in FIG. 7.

That is, the mobile terminal lastly selects one of the BGM lists set in the time mode, the place mode, and the telephone number mode according to the user's selection, and requests that the sound provider 300 provide BGM of the selected BGM list in step S800. According to the BGM request for the BGM service, the mobile terminal receives and outputs requested BGM of the BGM list combined with voice data sent from the destination mobile terminal in step S810.

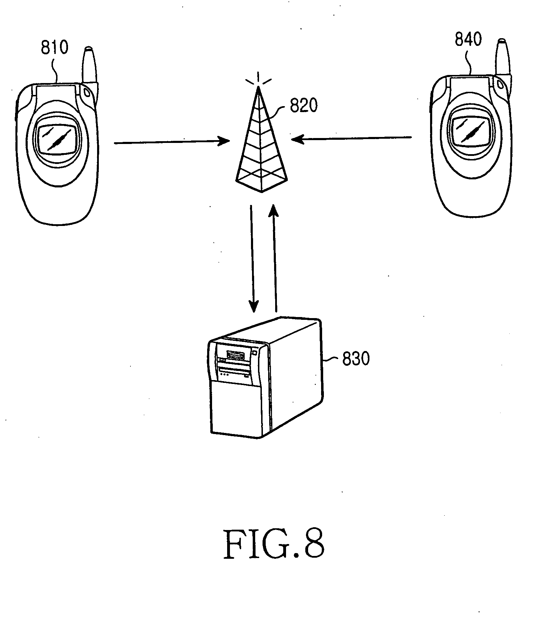

FIG. 8 is a schematic diagram illustrating a BGM service providing system in accordance with another embodiment of the present invention. In this embodiment, a sound provider 830 stores mode information for the BGM service requested by mobile terminals 810 and 840, a stored BGM list corresponding to a set mode, and BGM of the BGM list. The mobile terminals 810 and 840 store only the mode information for the BGM service.

Accordingly, when a telephone number is input and a communication request signal is input, the calling mobile terminal 810 determines a mode in which the BGM service is set, and sends the set mode information and a communication request signal to a mobile exchange 820. The mobile exchange 820 sends the communication request signal to the called mobile terminal 840 and sends the mode information to the sound provider 830.

The sound provider 830 detects a BGM list correspondingly set to the mode information from the mobile exchange 820, and sends BGM of the detected BGM list to the mobile exchange 820. The mobile exchange 820 combines voice data sent from the mobile terminals 810 and 840 and the BGM sent from the sound provider 300, and transmits the combined BGM to destination mobile terminals.

In accordance with the present invention, the mobile terminal sets BGM in each service mode and stores a BGM list mapped to the set mode. The sound provider maps BGM of the BGM list to a telephone number of a destination mobile terminal and stores a result of the mapping. Upon sending a communication request signal, the mobile terminal determines a set mode, detects BGM list information stored in the set mode, and sends the detected BGM list information, such that the user can receive BGM pieces.

Further, the mobile terminal stores a BGM list according to a service mode and receives BGM from the BGM list stored for the set mode.

When BGM of the BGM service is set according to a place, time zone, and telephone number (opposite party) and the communication request signal is input, the mobile terminal automatically confirms a place at which the user is located, a current time, and an identity of the opposite party, receives the BGM and outputs the received BGM, such that various BGM pieces can be variously provided according to the user's wishes without a special setting operation when a place, time zone and opposite party are selected.

When a plurality of modes are set for the BGM service, a plurality of BGM pieces are arbitrarily output, such that the user can avoid the monotony of BGM in a communication state.

Although the preferred embodiments of the present invention have been disclosed for illustrative purposes, those skilled in the art will appreciate that various modifications, additions and substitutions are possible, without departing from the scope of the present invention.

## Claims

1. A mobile terminal for providing a background music service in a communication state, comprising:
a storing part for storing information of at least one background music service mode;
a communication part for communicating with external communication devices; and
a control part for detecting the stored information of the at least one background music service mode from the storing part, sending the detected information of the at least one background music service mode to the communication part when a communication command is input, and receiving background music corresponding to the sent information of the at least one background music mode to output the received background music through a speaker.

2. The mobile terminal as set forth in claim 1, wherein the control part transmits the detected information of the at least one background music service mode to a sound provider for providing the background music through the communication part, and outputs the received background music from the sound provider through the speaker.

3. The mobile terminal as set forth in claim 1 or 2, wherein the information of the at least one background music service mode further includes background music list information corresponding to the background music service mode, and
wherein the control part stores the background music list information for the background music service in the storing part according to the mode setting signal, detects the background music list information from the storing part to send the detected background music list information to the sound provider when the communication command is input, and receives background music of the sent background music list information from the sound provider to output the received background music through the speaker.

4. The mobile terminal as set forth in one of claims 1 to 3, wherein the storing part further stores at least one background music piece provided from the sound provider, and
wherein the control part detects stored background music corresponding to a currently set background music service mode from the storing part in the communication state so that the detected background music can be output through the speaker, and sends the detected background music to a called mobile terminal through the communication part.

5. The mobile terminal as set forth in claim 4, wherein the control part outputs the background music detected from the storing part through the speaker when a user voice signal is input through a microphone, mixes the voice signal and the background music, and sends a result of the mixing to the called mobile terminal.

6. The mobile terminal as set forth in one of claims 1 to 5, wherein a plurality of background music pieces are stored in the storing part, which correspond to the set information of the set at least one background music mode, and
wherein the control part outputs the plurality of background music pieces in an arbitrary order and sends the plurality of background music pieces to the called mobile terminal.

7. The mobile terminal as set forth in one of claims 1 to 5, wherein the information comprises a plurality of background music pieces including at least one of a time mode for setting background music according to a time zone in the communication state, a place mode for setting background music according to a place in the communication state, a telephone number mode for setting background music according to a telephone number, and a common mode for providing common background music when no set mode is present and no background music corresponding to a set mode is present.

8. A system for providing background music in a communication state, comprising:
a calling mobile terminal for enabling a plurality of background music service modes to be set, each of the plurality of background music service modes having its own background music list information, detecting a set background music service mode when a communication request signal is input, and transmitting the background music list information corresponding to the set mode to the sound provider;
a sound provider for storing background music, and outputting the background music corresponding to the background music list information which is received from the mobile terminal;
a called mobile terminal for transmitting a response signal to the communication request signal; and
a mobile exchange connecting the calling mobile terminal and the sound provider, connecting the calling mobile terminal and the called mobile terminal, and transmitting the background music provided from the sound provider to the calling and called mobile terminals when the response signal is received from the called mobile terminal.

9. The system as set forth in claim 8, wherein the sound provider stores background music service mode information set in the calling mobile terminal in order to transmit the corresponding background music to the mobile exchange when the background music service mode information is received from the calling mobile terminal.

10. The system as set forth in claim 8 or 9, wherein the each of the plurality of background music service modes includes at least one of a time mode for setting background music according to a time zone in the communication state, a place mode for setting background music according to a place in the communication state, a telephone number mode for setting background music according to a telephone number, and a common mode for providing common background music when no set mode is present and no background music corresponding to a set mode is present.

11. The system as set forth in one of claims 8 to 10, wherein the mobile exchange combines voice data sent from the calling and called mobile terminals with the background music sent from the sound provider, and transmits a result of the combining to the calling and called mobile terminals.

12. A system for providing background music in a communication state, comprising:
a sound provider for storing background music and for transmitting the background music corresponding to a background music request signal when the background music request signal is received;
a calling mobile terminal for receiving and storing the background music from the sound provider, enabling a plurality of background music service modes to be set, detecting background music corresponding to a currently set background music service mode when a communication request signal is input, and outputting and transmitting the detected background music;
a called mobile terminal for transmitting a response signal to the communication request signal and outputting the detected background music sent from the calling mobile terminal; and
a mobile exchange for connecting the calling mobile terminal and the sound provider, and connecting the calling mobile terminal and the called mobile terminal.

13. The system as set forth in claim 12, wherein the calling mobile terminal mixes and encodes a voice signal and the detected background music, and transmits a result of the mixing and the encoding to the called mobile terminal when the voice signal is input from the calling mobile terminal in the communication state, and
wherein the called mobile terminal receives and decodes the result of the mixing and the encoding from the calling mobile terminal, separates the decoded data into the voice signal and the detected background music, and outputs the voice signal and the detected background music through a speaker.

14. The system as set forth in claim 12 or 13, wherein the calling mobile terminal outputs the background music detected according to the currently set mode and a voice signal through a speaker when the called mobile terminal receives the voice signal from the calling mobile terminal.

15. The system as set forth in claim 14, wherein the detected background music corresponding to the currently set mode is a plurality of background music pieces, and
wherein the calling mobile terminal outputs the plurality of background music pieces in a predetermined order and transmits the plurality of background music pieces to the called mobile terminal.

16. A method for receiving a background music service in a communication state using a mobile terminal, comprising the steps of:
(a) determining whether a communication request signal has been input in relation to a telephone number;
(b) when the communication request signal has been input, determining at least one set background music service mode from a plurality of settable background music services modes;
(c) confirming detailed mode information associated with the determined background music service mode;
(d) transmitting the detailed mode information to a sound provider providing background music;
(e) receiving background music that corresponds to the detailed mode information; and
(f) outputting the received background music.

17. The method as set forth in claim 16, further comprising the steps of:
(g) after the step (c) is performed, retrieving a background music list corresponding to the detailed mode information; and
(h) transmitting the retrieved background music list to the sound provider.

18. The method as set forth in claim 17, wherein the step (e) comprises the step of:
receiving information including the background music that corresponds to the detailed mode information and voice data sent from another mobile terminal are combined; and
outputting the received information.
